# EUROPEAN PATENT SPECIFICATION

(11) **EP 1 319 579 B1**
(45) Date of publication and mention of the grant of the patent: **08.10.2003**
(21) Application number: 01129082.2
(22) Date of filing: 07.12.2001
(51) Int. Cl.: B62D 25/08, B60K 11/04, B62D 29/04

(54) **Pre-assembled front unit for motor vehicles**
Vorassembliertes Frontmodul für Kraftfahrzeuge
Module avant pré-assemblé pour véhicules automobiles

(43) Date of publication of application: 18.06.2003
(73) Proprietor: DENSO THERMAL SYSTEMS S.p.A., 10046 Poirino (Torino) (IT)
(72) Inventor: Cristante, Luigi, 10091 Alpignano (IT); Masciandara, Eustachio, 10098 Rivoli (IT)
(74) Representative: Marchitelli, Mauro

(56) References cited:
- EP-A- 1 067 005
- DE-A- 10 124 709
- US-A1- 2001 019 098
- US-B1- 6 237 676
- US-B1- 6 260 609

## Description

This invention relates to a pre-assembled front unit for motor vehicles comprising:
a supporting structure destined to be fastened to the front part of a vehicle,
a condenser and a radiator connected to the supporting structure and
connection devices for fastening the condenser and the radiator to the supporting structure in such a way that the condenser and the radiator can be removed separately one respect to the other by means of a movement from the bottom upwards (see US-A-6 237 676).

This invention was developed specifically to satisfy the need of removing heat exchangers (condenser and radiator) from a motor vehicle upwards and separately and the need of adapting the front unit to different models of the same vehicle fitting different powertrain versions. Often, when the powertrain equipping the vehicle is changed, the distance between the heat exchangers of the front module and the chassis must be changed to account for the different clearance requirements and, consequently, the different layout of the components inside the engine compartment. This occurs specifically in the case of versions equipped with manual transmission, automatic transmission and diesel engine.

The problem of this invention is to provide a pre-assembled front unit for motor vehicles of the type described above which can be adapted to vehicles fitting different powertrains without the need of using different supporting structures for the different models.

According to this invention, this scope is attained by means of a pre-assembled front unit which characteristics are described in the main claim.

This invention will be better explained by the following detailed descriptions with reference to the accompanying figure as non-limiting example, whereas:
figure 1 is an exploded prospective view of a pre-assembled front unit according to this invention,
figures 2 and 3 are schematic cross-sections according to the lines II-II and III-III in figure 1,
figure 4 is an enlarged scale prospective view of the part indicated by the arrow IV in figure 2,
figure 5 is an elevated view according to the arrow V in figure 4,
figure 6 is a partial view according to the line VI-VI in figure 5 and,
figure 7 is an exploded prospective view of the detail indicated by the arrow VII in figure 2.

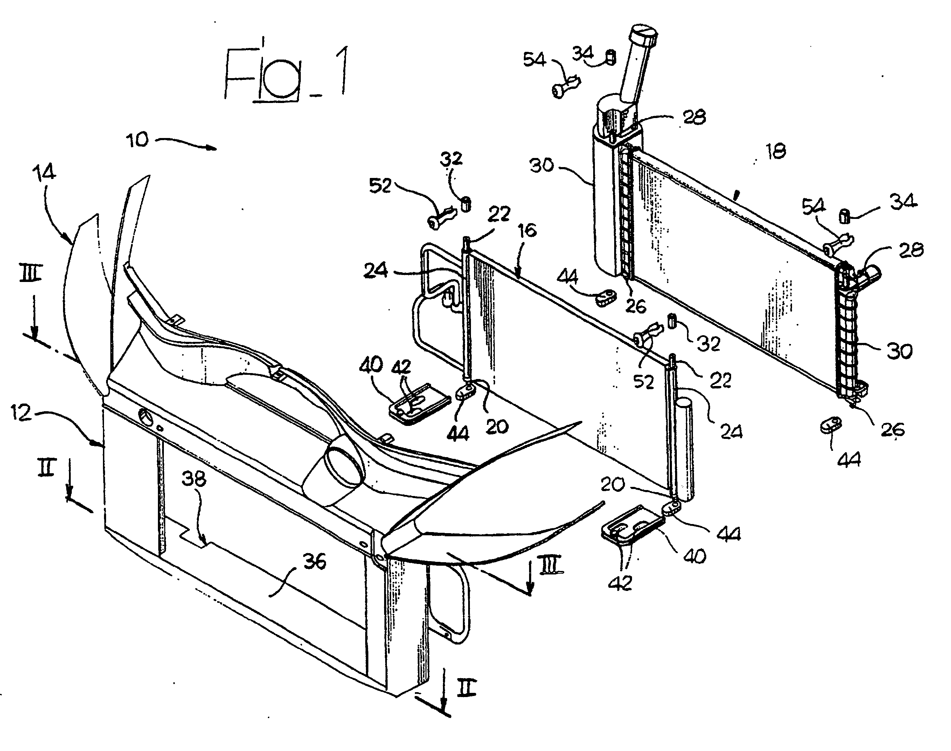

With reference to figure 1, number 10 indicates a pre-assembled unit for motor vehicles according to this invention. The front unit 10 comprises a supporting structure made of plastic material 12 which supports the various components of the pre-assembled unit and which is destined to be fitted on the front part of a motor vehicle. In figure 1, number 14 schematically indicates the upper front part of a chassis of a motor vehicle to which the supporting structure 12 is. fastened in a conventional fashion.

The pre-assembled unit 10 comprises a condenser 16 which is part of an air conditioning system in the motor vehicle and a radiator 18 which is part of the cooling system of the internal combustion engine fitted in the vehicle. Moreover, the pre-assembled unit 10 comprises a manifold (not shown) supporting an electrical fan unit facing the surface of the radiator 18 facing outwards with respect to the engine compartment. The condenser 16 is equipped with a pair of lower pins 20 and a pair of upper pins 22 on a vertical axis. Preferably, the pins 20, 22 are either fastened to, or form an integral part with, the ends of a pair of tubular distributors 24. The radiator 18 is also equipped with pair of lower pins 26 and a pair of upper pins 28 on a vertical axis. Preferably, the pins 26, 28 form an integral part with the respective plastic material reservoirs 30. Elastomer bushings 32, 34 are preferably inserted on the upper pins 22 and 28 of the condenser 16 and the radiator 18.

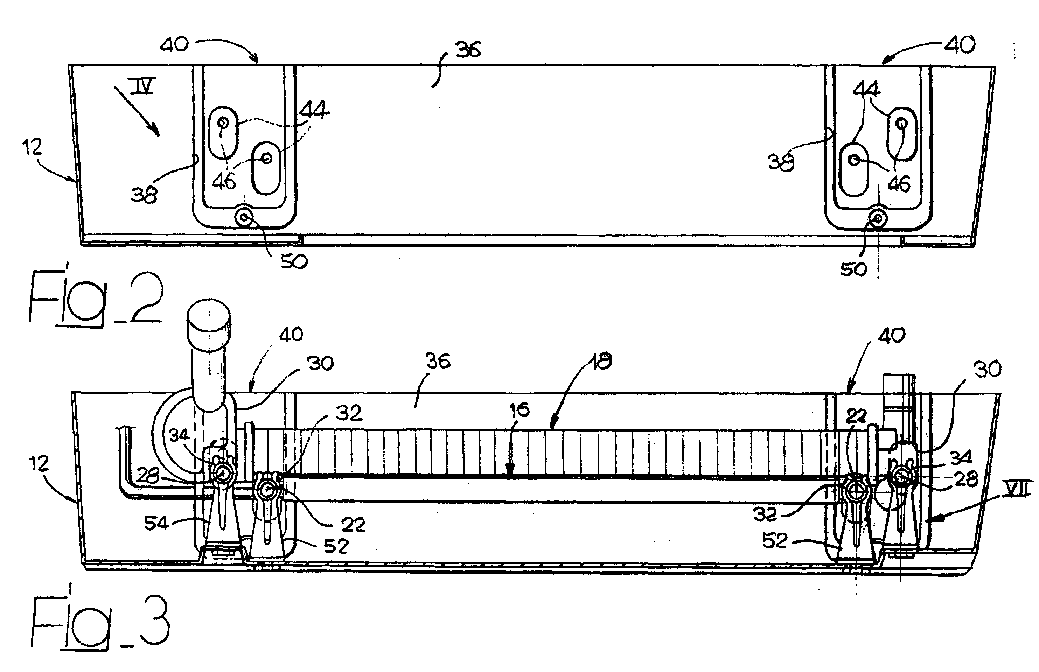

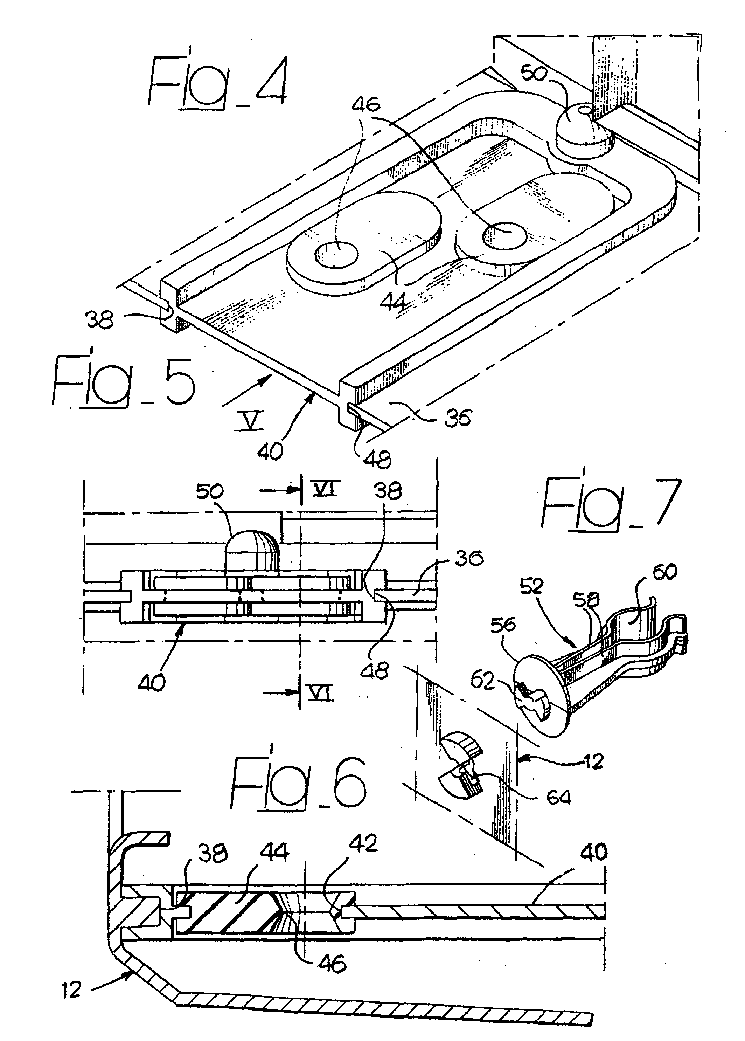

With reference to the figures 1, 2 and 4-6, the supporting structure 12 comprises a lower supporting base 36 equipped with a pair of seats 38 in which the respective lower supporting plates 40 are fitted. Each supporting plate 40 is equipped with a pair of holes 42 (figure 6) in which an elastomer material block 44 with a hole 46 is inserted. The holes 46 of which plate 40 receive the lower pins 20, 26 of the condenser and the radiator with a slight interference.

Each plate 40 is fastened in either a permanent or removable fashion to the supporting structure 12. In the example shown in the figures, each plate 40 has a groove 48 on the edge which is engaged by the edge of the seat 38. Fastening is achieved by means of a screw which extends through a hole crossing the supporting base 36 and engaging a projecting portion 50 formed on plate 40.

The supporting structure 12 supports two pairs of clips 52, 54 which engage the upper pins 22 and 28 of the condenser 16 and the radiator 18, respectively. As can be seen in particular in figure 7, each clip 52, 54 comprises a base 56 from which two deformable portions 58 project, said portions facing each other and defining a partially open seat 60 in which a respective pin 22, 28 is clipped by interposing the respective elastomer material bushing 32, 34. The base 56 of each clip 52, 54 is equipped with devices for fastening to the supporting structure 12. In the example shown in the figures, said fastening device have a bayonet coupling comprising an engaging portion 62 and a seat 64 formed in the supporting structure 12. The bayonet coupling 62, 64 is configured so to fasten the clip 52 to the supporting structure 12 solely by means of a rotation of 90 degrees after inserting the projecting portion 62 into the corresponding seat 64.

The condenser 16 and the radiator 18 are fastened to the supporting structure 12 by inserting the lower pins 20 into the holes 46 with a movement from the top downwards and then engaging the respective clips 52, 54 by means of a rocking movement. The condenser 16 and the radiator 18 can be removed separately one from the other from the supporting structure 12 by releasing the upper pins 22, 28 from the clips 52, 54 and then removing them with a movement from the bottom upwards.

The pre-assembled front unit according to this invention can be fitted on motor vehicles fitting different powertrains which require a different relative distance between the heat exchangers 16, 18 and the supporting structure 12 according to the different clearance requirements of the powertrain. In order to satisfy this requirement, the structure according to this invention will remain unchanged for the various models with the sole replacement of the plates 40 and the clips 52, 54. This is because the position of the condenser 16 and the radiator 18 can be varied with respect to the supporting structure 12 while maintaining unchanged the shape and dimensions of the supporting structure by changing the position of the holes 46 and the seats 60. This entails a considerable cutting of costs for tooling since different dies for making different supporting structures for vehicle fitting different powertrains are no longer required.

## Claims

1. Pre-assembled front unit for motor vehicles comprising:
a supporting structure (12) destined to be fastened to the front part of a vehicle,
a condenser (16) and a radiator (18) connected to the supporting structure (12) and
connection devices for fastening the condenser (16) and the radiator (18) to the supporting structure (12) in such a way that the condenser and the radiator can be removed separately one respect to the other by means of a movement from the bottom upwards,
**characterised in that** the supporting structure (12) supports a pair of interchangeable lower plates (40) each of which is equipped with positioning and fastening devices (46) which are adapted to the different power trains of the vehicle for engaging the corresponding devices (20, 26) on the condenser (16) and on the radiator (18) which can be disengaged by means of a movement from the bottom upwards of the condenser (16) and of the radiator (18).

2. Front unit according to claim 1, **characterised in that** the supporting structure (12) comprises two pairs of interchangeable clips (52, 54) engaging the respective upper positioning and fastening devices (22, 28) on the condenser (16) and on the radiator (18).

3. Front unit according to claim 1, each of said lower supporting plates (40) comprise a pair of deformable material blocks (44) equipped with respective holes (46) engaging positioning and fastening pins (20, 26) in the lower parts of the condenser (16) and the radiator (18).

4. Front unit according to claim 1, **characterised in that** each of said clips (52) comprises a partially open seat (60) which clips onto a respective positioning and fastening pin (22, 28) in the upper parts of the condenser (16) and the radiator (18).

## Patentansprüche

1. Vormontierte Vordereinheit für Motorfahrzeuge mit: einer Stützkonstruktion (12), bestimmt an dem Vorderteil eines Fahrzeugs befestigt zu werden,
einem Kondensator (16) und einem Kühler (18), verbunden mit der Stützkonstruktion (12) und
Verbindungsvorrichtungen zum Befestigen des Kondensators (16) und des Kühlers (18) an der Stützkonstruktion (12) auf solch eine Weise, dass der Kondensator und der Kühler einzeln mit Bezug auf das andere Bauteil entfernt werden können, mittels einer Bewegung von der Unterseite nach oben,
**dadurch gekennzeichnet dass** die Stützkonstruktion (12) ein Paar untereinander austauschbare untere Scheiben (40) stützt, von denen jede mit Positionierungs- und
Befestigungsvorrichtungen (46) ausgestattet ist, die den verschiedenen Kraftübertragungen der Fahrzeuge angepasst sind, um mit den entsprechenden Vorrichtungen (20, 26) auf dem Kondensator (16) und dem Kühler (18) in Eingriff zu sein, die mittels einer Bewegung des Kondensators (16) und des Kühlers (18) von der Unterseite nach oben gelöst werden können.

2. Vordereinheit gemäß Anspruch 1, **dadurch gekennzeichnet dass** die Stützkonstruktion (12) zwei Paar untereinander austauschbare Klammern (52, 54) hat, die mit den entsprechenden oberen Positionierungs- und Befestigungseinrichtungen (22, 28) auf dem Kondensator (16) und dem Kühler (18) in Eingriff sind.

3. Vordereinheit gemäß Anspruch 1, wobei jede der unteren Stützscheiben (40) ein Paar Blöcke (44) aus einem verformbaren Werkstoff hat, die ausgestattet mit entsprechenden Löchern (46) mit den Positionierungs- und Befestigungsbolzen (20, 26) in den unteren Teilen des Kondensators (16) und des Kühlers (18) in Eingriff sind.

4. Vordereinheit gemäß Anspruch 1, **dadurch gekennzeichnet dass** jede der Klammern (52) einen teilweise offenen Sitz (60) hat, der auf einem entsprechenden Positionierungsund Befestigungsbolzen (22, 28) in dem oberen Teil des Kondensators (16) und des Kühlers (18) anklammert.

## Revendications

1. Partie avant pré-assemblée pour véhicules à moteur comprenant :
une structure de support (12) destinée à être fixée à la partie avant d'un véhicule,
un condensateur (16) et un radiateur (18) reliés à la structure de support (12) et
des dispositifs de connexion permettant de fixer le condensateur (16) et le radiateur (18) à la structure de support (12) de telle sorte que le condensateur et le radiateur puissent être enlevés séparément l'un par rapport à l'autre, en effectuant un mouvement du bas vers le haut ;
**caractérisée en ce que** la structure de support (12) supporte une paire de plateaux inférieurs interchangeables (40), chacun d'eux étant équipé de dispositifs de positionnement et de fixation (46) qui sont adaptés aux différentes transmissions du véhicule pour engager les dispositifs correspondants (20, 26) sur le condensateur (16) et sur le radiateur (18) qui peuvent être enlevés, par un mouvement du bas vers le haut du condensateur (16) et du radiateur (18).

2. Partie avant selon la revendication 1, **caractérisée en ce que** la structure de support (12) comprend deux paires de clips interchangeables (52, 54) permettant l'engagement des dispositifs respectifs de positionnement supérieur et de fixation (22, 28) sur le condensateur (16) et sur le radiateur (18).

3. Partie avant selon la revendication 1, chacun desdits plateaux de support inférieur (40) comprenant une paire de blocs en matériau déformable (44) équipé d'orifices respectifs (46) permettant d'engager des broches de positionnement et de fixation (20, 26) dans les parties inférieures du condensateur (16) et du radiateur (18).

4. Partie avant selon la revendication 1, **caractérisée en ce que** chacun desdits clips (52) comprend un logement partiellement ouvert (60), qui s'insère sur une broche de positionnement et de fixation respective (22, 28) dans les parties supérieures du condensateur (16) et du radiateur (18).
